# EUROPEAN PATENT SPECIFICATION

(11) **EP 2 331 734 B1**
(45) Date of publication and mention of the grant of the patent: **19.09.2012**
(21) Application number: 09802576.0
(22) Date of filing: 23.07.2009
(51) Int. Cl.: D02G 3/44, D02G 3/40, A01K 91/00

(54) **PROCESS FOR PRODUCING A FISHING LINE**
VERFAHREN ZUR HERSTELLUNG EINER ANGELSCHNUR
PROCÉDÉ DE FABRICATION D'UNE LIGNE DE PÊCHE

(30) Priority: 31.07.2008 IT MI20081425
(43) Date of publication of application: 15.06.2011
(73) Proprietor: Goretti, Marco, 23821 Abadia Lariana LC (IT); Longhi, Maria Antonietta, 23821 Abbadia Lariana LC (IT)
(72) Inventor: Goretti, Marco, 23821 Abadia Lariana LC (IT); Longhi, Maria Antonietta, 23821 Abbadia Lariana LC (IT)
(74) Representative: Lunati & Mazzoni S.r.L.
(86) International application number: PCT/IB2009/006317
(87) International publication number: WO 2010/013108

(56) References cited:
- EP-A- 0 740 002
- EP-A- 1 306 471
- EP-A- 1 647 615
- WO-A-2007/094062
- JP-A- 2000 093 056
- JP-A- 2003 134 979
- US-A- 4 543 286
- US-A1- 2008 022 582

## Description

### FIELD OF THE INVENTION.

The present invention relates to a process for producing a line for fishing rods of the type described in the preamble of claim 1. Such a line is for example described in EP-A-740002.

### DESCRIPTION OF PRIOR ART

There are currently known various types of lines for fishing rods or for similar applications, in particular lines made of polymeric materials, such as polyamide, UHMWPE (Ultra High Molecular Weight PolyEthylene) and the like.

They comprise, structurally, multifilament yarns, i.e. a plurality of fibres, or filaments, mutually twisted or entangled.

Some examples of line are described in patent applications: EP-A-1647615, EP-A-1306471, JP-A-2003/134979, JP-A-2000/093056, US-A-2008/022582.

Twisting or entangling takes place in specific braiding machines through known twists of the type known as "checkerboard" threading or normal threading or the like.

This prior art has some important drawbacks.

In fact, it would be desirable to further improve the tensile strength of the line. This is reduced by the arrangement of the filaments, which do not stretch along the direction of extension of the line.

A further drawback is given by the fact that the filaments, twisting on the outer surface of the line, form roughness or sharp edges which cause premature wear of this line and premature wear of the guide rings.

However, twisting is necessary to prevent fraying of the line and to give it a unit structure.

For example, in twisted lines produced with the various threading techniques it is difficult to obtain a constant diameter and, moreover, they are dyed by being immersed in solutions of coloured paint.

Consequently, after only a few hours of use partial loss of colour can be noted and, if subjected to stress, the coating becomes partially detached in some points.

Moreover, after a few casts the lines absorb water, which reduces their casting action considerably: in practice, with the same energy it is no longer possible to cover the initial distance, which is reduced by 40/50%.

Often, water absorption also causes premature deterioration of the line.

Said discontinuity is extremely important on some widely used diameters.

Another prior art technique is that of feeding bundles of filaments through a hot bath containing rubber-based product in liquid state, which is solidified by rapidly cooling said coating.

The drawback of this technique is a banana-skin effect. In fact, under stress the coating detaches from the filaments, or vice versa.

It must also be taken into account that the exposed part of line for fishing rods is subjected to the action of the sun and adverse weather conditions, while the other part is immersed and in contact with the substances present in salt water or with the alkalis in fresh water.

These factors contribute towards further hardening the coating of the line, which becomes even more fragile to the stresses caused by unwinding of the line during casting, and reeling in, especially in the case in which the bait with the weight of the catch must be reeled in.

### SUMMARY OF THE INVENTION

In this situation the technical aim of the present invention is to devise a process for producing a line for loading reels for fishing rods and for long-lines capable of substantially overcoming the aforesaid drawbacks.

Within this technical aim, an important object of the invention is to devise a process capable of achieving a multifilament line having a very high tensile strength along the direction of extension.

A further object of the invention is to achieve a multifilament line having high wear resistance.

Yet another object of the invention is to achieve a line capable of preventing premature deterioration due to absorption and stagnation of water in the line during fishing and in the reel after fishing.

The technical aim and objects specified are achieved by a process for producing a fishing line as described in the appended independent claim.

### BRIEF DESCRIPTION OF THE DRAWINGS

The accompanying drawing illustrates by way of example a preferred embodiment of the invention. In particular:

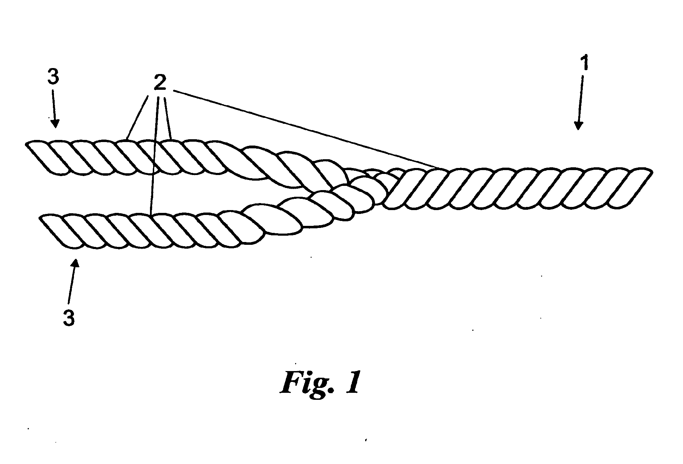

**Fig. 1** shows, in accordance with the invention, a diagram of twisting of a line for fishing rods and the like.

### DESCRIPTION OF PREFERRED EMBODIMENTS

With reference to the Figure, the line according to the invention is indicated as a whole with the number **1**.

The line 1 is provided for fishing rods, for professional or sport fishing and the like.

It comprises a plurality of filaments **2** made of high molecular weight polyethylene, in particular polyethylene known as UHMWPE (Ultra High Molecular Weight PolyEthylene), also known as High Modulus PolyEthylene (HMPE).

This material in fact has ideal mechanical and physical properties, such as high tensile strength and very low coefficient of friction; it is self-lubricating and very resistant to abrasion (15 times greater than carbon).

Moreover, it has no smell, no taste and is non-toxic.

The filaments 2 are grouped in a plurality of groups 3 of filaments, each realized by a plurality of filaments 2. The filaments 2 belonging to a same group 3 are mutually twisted or entangled.

The filaments 2 are present in a number ranging from 10 to 4000 for each single group 3.

Preferably, the number of filaments 2 ranges from 25 to 180 for each group 3 and each single filament can have a minimum diameter of 0.000076365 mm, corresponding to a theoretical count of 0.3337 dn (denier), and can reach a maximum diameter of 0.11285945 mm, corresponding to a theoretical count of around 300 dn.

The filaments 2 belonging to the same group 3 can be mutually twisted by means of simultaneous twisting operations.

In particular, a simultaneous entangling process with air jets is possible, which can mutually bond the various filaments 2 of each group 3.

Each group 3 of filaments 2 is then preferably subjected to a number of twists per metre ranging from 50 to 4000, preferably between 60 and 2000.

Said twists can be produced clockwise or anti-clockwise, also referred to as right and left.

Each single group 3 is twisted in the opposite direction to the other group and each single group 3 has a different number of twists per metre from the other. For example, a group 3 having a greater count can have a greater number of twists with respect to another yam with a smaller count

Moreover, the filaments 2 can advantageously be twisted with thin metal threads, for example made of stainless steel, copper, brass, etc.

The mutual twisting process of the groups 3 to realize the line 1 can include from 50 to 1600 twists per metre and more preferably from 60 to 800 twists per metre according to the groups and to the counts of the various groups 3.

In particular, the groups 3 with a low count, i.e. ranging from 10 dn to 180 dn, can be indispensable to obtain lines with dimensional stability.

Specifically, the groups 3 are fed through machines provided for entangling, or through machines that use other similar but equally valid techniques, which can be of the water jet or air jet type, preferably air jet.

For practicality and speed as metres per minute, the use of an entangling device or of other techniques which allow results similar to those used to treat specific synthetic yarns is preferable, for example AIR JET devices, excellent for polyester yarns (FDY, DTY, POY, HOY).

These devices guarantee a minimum production per minute of around 400 metres. This makes it possible to obtain stability on the line 1 and to avoid problems of adhesion and/or cohesion in the subsequent steps of the process, i.e. in the bonding or adhesive coating step of the line.

It must be mentioned that modern entangling devices, and/or the bonding devices coming from other similar techniques, have been designed to ensure minimum impact on the line using the technologies of entanglers with cross-flow.

A stable low tension process, together with the minimum impact deriving from cross-flow technology, produce low intensity entangling with minimum damages to the line 1, to obtain a very even line with low air consumption in the entangling chamber.

To give the lines 1 thus produced perfect seal and dimensional stability it is preferable for the twists imparted to be stabilized, preferably through a heat-setting process, preferably using steam jets during the final twisting step.

Finally, the process comprises a bonding step performed on the lines 1 and capable of acting on the groups 3 of filaments and on the filaments 2 themselves. The bonding process in the production line of the lines 1 can take place through forced impregnation of the lines in a specific container.

Plastic material in solid and/or semi-solid state belonging to the same family, or based on PE, PE-HD, PE-LD, UHMWPE, can be placed in this container.

The container can be provided with a heating device capable of reaching a temperature that can fluidize said plastic material, at least to a level of fluidity to obtain optimal impregnation and optimal adhesive coating or bonding of the line, in such a manner that does not in any way compromise the properties of the line.

Otherwise, adhesive coating can take place through impregnation of the line in appropriate solvent-based resins, or by impregnation of the line in resins in aqueous suspension.

These resins can be polyurethane resins, epoxy resins, elastomeric resins, acrylic resins, vinyl resins, rubber-based resins with the tendency to adhere. Resins based on solvents containing synthetic resins belonging to the same family with which the line was produced can be used, to give it softness.

It is also possible to achieve the adhesive coating using an adhesive comprising a liquid part per litre and a dry part; preferably but without limitation, the dry part should be between 2% and 66% per litre.

Alternatively to impregnation, the aforesaid processes can be performed using and applying these resins also by means of sealed spray devices.

Both in cases of impregnation and spraying the line 1 can be cured and dried by feeding it through a specific oven heated to temperatures variable as a function of the processes utilized, even using forced ventilation systems with temperatures ranging from 14° to 220°, preferably between 14° and 183° Celsius.

This process is generally used to obtain cross-linking and good adhesive coating.

Alternatively, glues and/or adhesives capable of cross-linking by means of UV lamps can be used, allowing the temperature required for cohesion to be reached, ranging from 12° to 228°, preferably between 14° and 183°.

Of all the processes listed the use of products in solution and in aqueous suspension are preferred, and more preferably the use of an elastomeric resin in aqueous suspension and alternatively also an epoxy resin in aqueous suspension. Moreover, during the drying and/or curing step, dimensional irregularities can occur on the diameter of the line.

To allow the product to be given uniform and constant diameters, a series of gaugers are positioned in one point of the device, such as to ensure uniformity of the coating of adhesive product on the surface and also such as to correct irregularity of the line, caused partly by the entangling process, or by an excessive quantity of adhesive on the line.

The gaugers are chosen suitable to provide a tolerance on the diameter of the line of ± 0.02 mm preferably of ± 0.01 mm.

In any case, it is advisable, to obtain uniform diameters close to those existing before bonding, for the adhesive to be coated on the line 1 in quantities in weight ranging from 0.1% to 18% of the final weight of the line 1.

The adhesive solution can advantageously also be used to implement a step in which additives useful to improve the mechanical and aesthetic features of the line '1 are dispersed in the same solution.

For example, substances which vary the coefficient of friction of the line, hard or semi-hard microparticles and coloured elements can be dispersed therein.

In particular, high knot strength must be guaranteed during use of the line. Moreover, in some cases the market demands lines with higher specific gravity than that of water.

To meet these requirements or demands, hard or semi-hard microparticles can be added to the adhesive solution.

Said microparticles can for example be metal, based on carbon, silica, micronized glass, calcium carbonate. However, all particles deriving from polluting or hazardous metal materials are excluded.

The microparticles act as anti-abrasion agents on the line, increasing its durability. The particles and microparticles preferably have diameters of over 5 microns, i.e. diameters varying from 5 up to 30 microns.

The dosage of these microparticles ranges from 0.001 % to 20% of the volume of the adhesive solution, preferably between 0.05% and 15% of the volume.

Dispersion into the environment of these particles is greatly reduced as they are amalgamated in the adhesive mass which, after cross-linking and drying have taken place, prevents said particles from escaping.

The adhesive mass can also contain dispersed insoluble coloured elements, of average dimensions, which in addition to acting as dye for the adhesive also act as protective and anti-abrasion agent for the line and prevent the knot from slipping.

The quantity of these ranges from 0.001% to 1.6% of the volume of the adhesive, preferably between 0.06 % and 1.4% according to the shade of colour selected.

As already mentioned, one or more metal threads can also be inserted, in relation to the final count and/or number of groups 3 required to reach the final count.

By doing so, the line 1 sinks in the water, as it has a higher specific gravity than that of the water.

Moreover, wear on the line by rubbing against rocks, stones and sand is further reduced and its resistance to bites by fish is further increased.

The invention achieves important advantages.

In fact, the line 1 has a very high tensile strength along the direction of extension, about 30%-40% greater than conventional lines with the same diameter.

The filaments 2 stretch predominantly in an axial direction and the line 1 has a smooth surface without sharp edges or roughness.

After being treated with the adhesive coating, the line remains soft and not stiff.

In practice, the line 1 can also be destined for the textile sector, for use in civil or military fabrics, due to its compactness and resistance to temperatures during washing and immersion up to 80-90°C.

The machining processes to prepare and produce the line before and after bonding make it possible to guarantee toughness and lasting slip, even if the adhesive coating capacity of the adhesive is depleted through intense use.

The line 1 has high wear resistance, even in fishing conditions in which wear is considerable, such as the action of friction caused by the line sliding through the rings of the fishing rod or friction created by rubbing of the line against sand and rocks.

A further advantage is given by the fact that the described twisting process allows greater production speed during the adhesive coating step. Therefore production costs are decreased.

Further advantages are provided by the adhesive and by the additives, which improve the mechanical properties of the line 1 and its wear resistance.

Another advantage is given by the fact that with this type of bonding or adhesive coating, the line becomes a solid body, thereby preventing water from seeping between the various filaments and decomposition of the line. The line does not absorb water and does not decay.

Moreover, the addition, for example, of metal particles or metal threads allows the line to sink and provides resistance to cutting and to rubbing against rocks or objects that could damage the line.

## Claims

1. A process for producing a fishing line (1) for fishing rods comprising in producing groups (3) of filaments (2) made of high molecular weight polyethylene, mutually twisting said groups (3) of filaments, and subsequently bonding said groups (3) said process being **characterized in that** before said groups (3) are mutually twisted to produce the line (1), each single group (3) is twisted in the opposite direction to the other group (3), and each single group (3) has a different number of twists per metre.

2. The process according to claim 1, wherein said groups (3) of filaments are mutually twisted by means of air jets.

3. The process according to one or more of the preceding claims, wherein said groups (3) of filaments are mutually twisted with a number of twists ranging between 60 and 800 twists per metre.

4. The process according to claim 3, wherein said filaments (2) belonging to a same group (3) are mutually twisted with a number of twists ranging between 60 and 2000 twists per metre.

5. The process according to claim 1, wherein said bonding step is produced through a quantity in weight of adhesive ranging from 0.1 % to 18% of the final weight of said line (1).

6. The process according to one or more of the preceding claims, comprising a step of dispersing additive substances in an adhesive provided for said bonding step.

7. The process according to claim 6, wherein said additive substances are selected from metal particles, silica-based particles, micronized glass particles, calcium carbonate particles.

8. The process according to claim 7, wherein said particles are selected suitable to give said line (1) a greater specific gravity than that of water.

9. The process according to one or more of the preceding claims, comprising a step to add at least one metal wire performed prior to said bonding step, said metal wire being selected from stainless steel, copper or brass.

## Patentansprüche

1. Verfahren zur Herstellung einer Angelschnur (1) für Angelruten und dergleichen, umfassend: die Herstellung einer Mehrheit von Gruppen (3) von Filamenten (2), die aus Polyethylen mit einem hohen Molekulargewicht gefertigt sind, wobei die besagten Gruppen (3) von Filamenten zusammengewebt und dann solche Gruppen (3) verklebt werden, wobei das besagte Verfahren ist **gekennzeichnet dadurch, dass** bevor solche Gruppen zusammengewebt werden um die besagte Schnur (1) zu herstellen, wird jede einzige Gruppe (3) in eine entgegengesetzte Richtung zu einer anderen Gruppe (3) gewebt, und jede einzige Gruppe eine verschiedene Anzahl von Drehungen pro Meter aufweist.

2. Verfahren nach Anspruch 1, wobei die besagten Gruppen (3) von Filamenten miteinander mittels Luftstrahlen gewebt sind.

3. Verfahren nach einem oder mehreren der vorangehenden Ansprüchen, wobei die besagten Gruppen (3) von Filamenten miteinander mittels Drehungen gewebt werden, die zwischen 60 und 800 Drehungen pro Meter umfassen.

4. Verfahren nach einem oder mehreren der vorangehenden Ansprüchen, wobei die besagten Filamenten (2), die zur selben Gruppe (3) von Filamenten gehören, mittels Drehungen zwischen 60 und 2000 Drehungen pro Meter gewebt werden.

5. Verfahren nach einem oder mehreren der vorangehenden Ansprüchen, wobei der besagte Verklebungsschritt mittels eine Gewichtsmenge Klebstoff durchgeführt wird, die zwischen 0,1% und 18% des endgültigen Gewichts der besagten Schnur (1).

6. Verfahren nach einem oder mehreren der vorangehenden Ansprüchen, das einen zusätzlichen Schritt umfasst, der zusammen mit dem besagten Verklebungsschritt durgeführt und die Dispersion der Zusatzstoffe in einem Kleber umfasst, der für den besagten Verklebungsschritt vorgesehen ist.

7. Verfahren nach Anspruch 6, wobei die besagten Zusatzstoffe zwischen Metallteilchen, Teilchen auf der Basis von Kieselerde, Teilchen aus mikronisierten Glas, Teilchen aus KalziumCarbonat ausgewählt werden.

8. Verfahren nach Anspruch 7, wobei die besagten Teilchen so ausgewählt werden, dass sie der besagten Schnur (1) ein höheres spezifisches Gewicht als des Wassers verleihen.

9. Verfahren nach einem oder mehreren der vorangehenden Ansprüchen, das einen Zusatzschritt mindestens einer Metalldraht umfasst, der vor dem besagten Verklebungsschritt durchgeführt wird, wobei die besagte Metalldraht zwischen Rostfreiem Stahl, Kupfer, Messing ausgewählt wird.

## Revendications

1. Procédé de fabrication d'un fil pour lignes de pêche (1) et similaires, comprenant: produire une pluralité de groupes (3) de filaments (2) fabriqués en polyéthylène haut poids moléculaire, tresser réciproquement lesdits groupes (3) de filaments et ensuite coller lesdits groupes (3), ledit procédé étant **caractérisé en ce que**, avant que lesdits groupes soient réciproquement tressés pour produire ledit fil (1), chaque groupe individuel (3) est tressé en direction opposée à un autre groupe (3) et chaque groupe individuel a un nombre différent de tressages par mètre.

2. Procédé selon la revendication 1, dans lequel lesdits groupes (3) de filaments sont tressés les uns avec les autres par des jets d'air.

3. Procédé selon une ou plusieurs des revendications précédentes, dans lequel lesdits groupes (3) de filaments sont tressés les uns avec les autres par des torsions comprises entre 60 et 800 torsions par mètre.

4. Procédé selon une ou plusieurs de revendications précédentes, dans lequel lesdits filaments (2) appartenant à un même groupe (3) de filaments sont tressés par des torsions comprises entre 60 et 2000 torsions par mètre.

5. Procédé selon une ou plusieurs des revendications précédentes, dans lequel ladite étape de collage est réalisée par une quantité en poids d'adhésif comprise entre 0,1 % et 18% du poids final dudit fil (1).

6. Procédé selon une ou plusieurs des revendications précédentes, comprenant une étape d'ajouter des additifs exécutée ensemble avec ladite étape de collage et comprenant la dispersion de substances additives dans un collant prévu pour ladite étape de collage.

7. Procédé selon la revendication 6, dans lequel lesdites substances additives peuvent être choisies parmi des particules métalliques, des particules à base de silicium, des particules de verre micronisé, des particules de carbonate de calcium.

8. Procédé selon la revendication 7, dans lequel lesdites particules sont choisies pour qu'elles soient aptes à donner audit fil (1) un poids spécifique supérieur à celui de l'eau.

9. Procédé selon une ou plusieurs des revendications précédentes, comprenant une étape d'addition d'au moins un fil métallique effectuée avant ladite étape de collage, ledit fil métallique étant choisi parmi acier inoxydable, cuivre, laiton.
